# EUROPÄISCHE PATENTSCHRIFT

(11) **EP 1 612 448 B1**
(45) Veröffentlichungstag und Bekanntmachung des Hinweises auf die Patenterteilung: **27.03.2019**
(21) Anmeldenummer: 05012183.9
(22) Anmeldetag: 07.06.2005
(51) Int. Cl.: F16F 1/38

(54) **Elastomeres Buchsenlager mit verbessertem Torsionsverhalten**
Elastomeric bush with improved torsion charateristics
Manchon élastomérique avec de meilleures caractéristiques en torsion

(30) Priorität: 29.06.2004 DE 102004031559
(43) Veröffentlichungstag der Anmeldung: 04.01.2006
(73) Patentinhaber: BOGE Elastmetall GmbH, 49401 Damme (DE)
(72) Erfinder: Kümper, Bernd, 32369 Rahden (DE)
(74) Vertreter: Bossmeyer, Jörg Peter

(56) Entgegenhaltungen:
- EP-A- 0 213 543
- US-A- 4 767 108
- US-B1- 6 170 812
- PATENT ABSTRACTS OF JAPAN Bd. 013, Nr. 498 (M-890), 9. November 1989 (1989-11-09) -& JP 01 199028 A (BRIDGESTONE CORP), 10. August 1989 (1989-08-10)
- PATENT ABSTRACTS OF JAPAN Bd. 010, Nr. 320 (M-530), 30. Oktober 1986 (1986-10-30) & JP 61 127932 A (TOYOTA MOTOR CORP; others: 01), 16. Juni 1986 (1986-06-16)

## Beschreibung

Die Erfindung betrifft ein elastomeres Buchsenlager mit verbessertem Torsionsverhalten. Sie bezieht sich auf ein gattungsgemäßes Lager mit einem grundsätzlich bekannten Aufbau, welches aus einer hohlzylindrischen Innenhülse, einem die Innenhülse konzentrisch oder exzentrisch umgebenden hülsenförmigen Außenteil und einem dazwischen angeordneten elastomeren Lagerkörper besteht, der ein Innen- bzw. Einlegeteil einschließt.

Buchsenlager dieser Art werden insbesondere im Automobilbau vielfach eingesetzt. Hier dienen sie beispielsweise der Lagerung der Bauteile für die Radaufhängung bzw. der Querlenker. Durch die Lager werden radial und axial eingetragene Kräfte, wie sie beispielsweise beim Einsatz eines Fahrzeugs durch Fahrbahnunebenheiten verursacht werden, gedämpft, um Geräusche und Vibrationen weitgehend von der Fahrgastzelle fernzuhalten. Die Lager werden dabei jedoch nicht nur radial und axial, sondern auch durch Torsion beansprucht. Bei den bekannten Lagern ist die Innenhülse mit Polyurethan (PUR) umspritzt oder der elastomere Lagerkörper, vorzugsweise aus Gummi, durch Vulkanisation fest mit der Innenhülse verbunden. Dadurch entstehen bei Beanspruchung durch Torsion hohe Drehmomente im Lagerkörper, welche zu starker Beanspruchung und in der Folge zu vorzeitigem Verschleiß der Lager führen. Zudem ist es mit einer PUR-umspritzten Innenhülse als Nachteil anzusehen, dass die äußere Oberfläche der Innenhülse, in der Regel durch Längs- und/oder Querrillen, profiliert werden muss, um ein sicheres Haften des PUR an der Innenhülse zu erreichen. Zur Abdichtung des Lagers gegen Verunreinigungen von außen muss bei der Montage noch eine Plastikkappe auf das bzw. die axialen Enden des Lagers aufgepresst werden.
Als nachteilig ist es außerdem anzusehen, dass dieses Design mit einem gewissen Spiel ausgelegt werden muss, um ein Klemmen des Innenteils und damit erhöhte Beanspruchung durch Torsion zu verhindern. Ein in der beschriebenen Weise ausgebildetes Lager wird beispielsweise durch die DE 44 291 02 A1 offenbart. Anders als das in der vorgenannten Schrift beschriebene Lager weisen viele der bekannten Lösungen zudem eine Innenhülse auf, die an ihrem axialen Ende zur Abdichtung des Lagers einen Flansch aufweist. Jedoch ergibt sich durch eine solche Ausbildung ein erhöhter Aufwand bei der Fertigung der Innenhülse. Außerdem muss die Innenhülse gegebenenfalls mit einem Oberflächenschutz versehen werden, um insbesondere die Stirnfläche des Flansches zu schützen.

Dokument JP 61-127932 wird als nächstliegenden Stand der Technik angesehen: es offenbart ein elastomeres Buchsenlager mit einer Innenhülse, einem die Innenhülse umringenden Gleitelement in Form von Kunststoffbuchsen, einem die Kunststoffbuchsen umringenden Buchsenteil, einem das Buchsenteil umringenden Gummiblock und einer den Gummiblock umringenden Außenhülse. In die axialen Enden der Innenhülse sind Ringscheiben eingesetzt, auf denen Ringelemente sitzen, gegen welche der Gummiblock (äußerer Lagerkörper) mit axialen Dichtlippen dichtet.

Aufgabe der Erfindung ist es, ein elastomeres Buchsenlager bereitzustellen, welches im hohen Maße unempfindlich gegen Beanspruchung durch Torsion ist, dabei einen einfachen Aufbau besitzt und eine kostengünstige Fertigung ermöglicht.
Die Aufgabe wird durch ein elastomeres Buchsenlager mit den Merkmalen des Hauptanspruchs gelöst. Vorteilhafte Aus- bzw. Weiterbildungen des erfindungsgemäßen Lagers sind durch die Unteransprüche gegeben.
Das vorgeschlagene elastomere Buchsenlager besteht in an sich bekannter Weise aus einer hohlzylindrischen Innenhülse, einem diese Innenhülse umgebenden hülsenförmigen Außenteil und einem zwischen Innenhülse und Außenteil eingeordneten elastomeren Lagerkörper. Der elastomere Lagerkörper besteht aus einem inneren Lagerkörper und einem äußeren Lagerkörper, zwischen denen mindestens ein sich in Umfangs- und axialer Richtung erstreckendes Innenteil eingeschlossen ist. Zur Verbesserung des Torsionsverhaltens und zur Vereinfachung des Lageraufbaus ist der innere Lagerkörper erfindungsgemäß durch mindestens ein elastomeres Formteil gebildet, das von einem axialen Ende des Lagers zwischen Innenhülse und mit dem äußeren Lagerkörper verbundenen Innenteil eingeschoben wird und dort mittels einer aufgepressten Ringscheibe gehalten wird. In vorteilhafter Weise steht das von der aufgepressten Ringscheibe gehaltene Formteil, welches je eine Gleitfläche für die Innenhülse und das Innenteil ausbildet, unter Vorspannung. In Folge der bei Aufpressen eintretenden Verformung zieht sich ein radial innerer Bereich der Ringscheibe ein Stück in die Innenhülse hinein und gelangt unter Ausbildung eines Presssitzes an deren Innenkontur zur Anlage.

Erfindungsgemäß weist das elastomere Formteil im Bereich eines axialen Lagerendes einen Randwulst mit einem u-förmig nach radial innen überhängenden Rand auf. Der solchermaßen geformte Randwulst bildet eine Umfassung für die Ringscheibe aus, welche auf das betreffende Lagerende aufgepresst ist.
Gemäß einer bevorzugten Ausführungsform besteht der innere Lagerkörper des vorgeschlagenen elastomeren Buchsenlagers aus zwei in gleicher Weise ausgebildeten und zwischen Innenhülse und Innenteil gehaltenen elastomeren Formteilen, welche von jeweils einem axialen Lagerende auf die Innenhülse aufgeschoben sind. Durch die aufgepressten Ringscheiben sind dabei die den inneren Lagerkörper ausbildenden Formteile in axialer Richtung gegeneinander vorgespannt, wobei sie sich an den Ringscheiben abstützen.

Das oder die den inneren Lagerkörper ausbildenden Formteile bestehen vorzugsweise aus einem Elastomer, beispielsweise Gummi, mit einem hohen Eigenschmieranteil.

Entsprechend einer vorteilhaften Weiterbildung der Erfindung weisen das bzw. die Formteile an ihrer Innen- und/oder ihrer Außenseite Waben auf, in die ein Gleitmittel, vorzugsweise ein Fett eingelagert ist. Bei dieser Ausbildungsform wird durch die Ringscheibe bzw. die Ringscheiben eine auch das Austreten des Gleitmittels aus dem Lager verhindernde Dichtung gebildet. Gleichzeitig wirkt die aufgepresste Ringscheibe als Axialanschlag.

Unter Beibehaltung des grundsätzlichen erfindungsgemäßen Aufbaus kann das Lager auch als hydraulisch dämpfendes Lager ausgelegt sein. Dabei sind in dem äußeren Lagerkörper zwei oder mehr durch mindestens einen Kanal miteinander verbundene Kammern zur Aufnahme eines fluiden Dämpfungsmittels ausgebildet.

Während insbesondere die Innenhülse vorzugsweise aus metallischem Material, beispielsweise Aluminiumdruckguss besteht, kommen für das Innenteil, welches mit dem äußeren Lagerkörper verbunden ist, je nach dem vorgesehenen Verwendungszweck des Lagers, unterschiedliche Materialien in Betracht. Es kann aus Aluminiumblech oder aber auch aus einem Kunststoff bestehen.

Die Erfindung soll nachfolgend anhand eines Ausführungsbeispiels nochmals näher erläutert werden. In den zugehörigen Zeichnungen zeigen:
- Fig. 1: Eine Ausführungsform des erfindungsgemäßen Lagers in einer axial geschnittenen Darstellung,
- Fig. 2: Das zur Ausbildung des inneren Lagerkörpers des Lagers nach Fig. 1 dienende elastomere Formteil in einer räumlichen Darstellung.

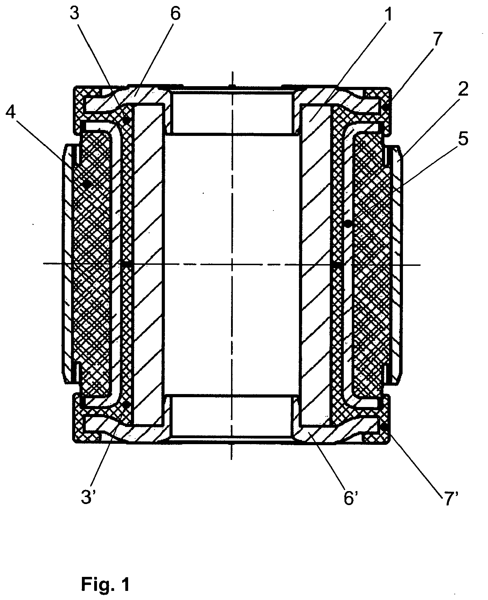

Das in der Fig. 1 in einer Schnittdarstellung gezeigte Lager besteht aus einer metallischen Innenhülse 1, einem die Innenhülse 1 konzentrisch umgebenden, hier ebenfalls, aber nicht zwingend hülsenförmigen Außenteil 2 und dem dazwischen eingeordneten Lagerkörper 3, 3', 4, welcher ein Innenteil 5 umschließt. Der Lagerkörper 3, 3', ist in der radialen Richtung zweiteilig ausgebildet, so dass er aus einem inneren Lagerkörper 3, 3' und einem äußeren Lagerkörper 4 besteht.
Zwischen dem inneren Lagerkörper 3, 3' und dem äußeren Lagerkörper 4 ist das Innenteil 5 eingeordnet, welches mit dem äußeren Lagerkörper 4, vorzugsweise durch Vulkanisation verbunden ist. Dem Grundgedanken der Erfindung folgend, ist der innere Lagerkörper 3, 3' durch zwei spezielle elastomere Formteile gebildet.
Diese sind von den axialen Lagerenden her zwischen Innenhülse 1 und Innenteil 5 eingeschoben und werden durch zwei, jeweils an den Lagerenden angeordnete Ringscheiben 6, 6' gehalten. Im Bereich der axialen Lagerenden weisen die elastomeren Formteile 3, 3' einen Randwulst 7, 7' mit einem u-förmig nach radial innen überhängenden Rand auf. Hierdurch wird je eine Umfassung für die Ringscheiben 6, 6' gebildet, welche bei der Fertigung auf die Lagerenden aufgepresst werden. Im Zuge des Aufpressens verformen sich die Ringscheiben 6, 6', wie aus der Zeichnung ersichtlich, so dass sie in ihrem radial inneren Bereich in die Innenhülse 1 hineingedrückt werden und an deren Innenkontur unter Ausbildung eines Presssitzes zur Anlage gelangen. Dabei werden bei dem dargestellten Lager die beiden Formteile 3, 3' in axialer Richtung gegeneinander vorgespannt. Durch das Zusammendrücken der Formteile 3, 3' beim Aufpressen der Ringscheiben 6, 6' und insbesondere im Bereich der Ringscheiben 6, 6' selbst wird außerdem eine radial wirkende Vorspannung erreicht. Gleichzeitig wird das Lager an den Stirnseiten durch die Ringscheibe 6, 6' abgedichtet.

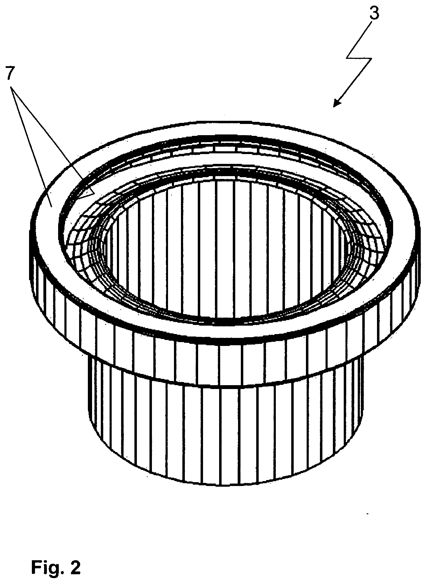

Die Fig. 2 zeigt eines der im Lager nach der Fig. 1 verwendeten elastomeren Formteile 3, 3' vor der Montage des Lagers in einer räumlichen Darstellung. Wie zu erkennen ist, handelt es sich um ein hohlzylindrisches Formteil 3. An einem seiner axialen Enden ist ein Randwulst 7 bzw. eine Auskragung ausgebildet. An dem Randwulst 7 ist ein u-förmig radial nach innen überhängender Rand ausgebildet. Dieser bildet bei der Montage des Lagers eine Umfassung für die aufzupressende Ringscheibe 6 aus. Die Formteile 3, 3' können aus PUR oder einem ähnlichen Werkstoff hergestellt werden. Sie können gemäß einer vorteilhaften, bereits erwähnten Ausgestaltung, außerdem an ihrer inneren und/oder äußeren Umfangsfläche eine in der Fig. 2 nicht dargestellte Wabenstruktur oder eine damit vergleichbare Struktur zur Aufnahme eines Schmier- bzw. Gleitmittels aufweisen.

Durch die von den Formteilen 3, 3' des inneren Lagerkörpers zur Innenhülse 1 und zum Innenteil 5 ausgebildeten Gleitflächen ist praktisch eine unbegrenzte Torsion gewährleistet, das heißt das Lager kann in beliebigen Winkeln auf Verdrehung beansprucht werden, ohne dass es dabei zusätzlich auf Verschleiß beansprucht würde. Aufgrund seines vorteilhaften und einfachen Aufbaus ergeben sich zudem niedrige Fertigungskosten. Dies betrifft zum Beispiel die Innenhülse 1, an der keine Längs- und Querrillen erforderlich sind, um etwa das Anhaften von PUR zu gewährleisten, da die Innenhülse 1 nach der vorliegenden Lösung nicht umspritzt wird. Insoweit ist es natürlich auch vorteilhaft, dass ein separater Arbeitsgang für das Umspritzen entfällt. Ein weiterer Vorteil besteht zudem darin, dass die Innenhülse 1, anders als bei den meisten bekannten Lagern der gattungsgemäßen Art, keinen Flansch aufweist. Dieser wird durch die Ringscheibe bzw. Ringscheiben 6, 6' (Spacer) ersetzt. Die Innenhülse 1 besitzt hierdurch eine einfachere Geometrie, was die Herstellungskosten ebenfalls verringert. Durch die vollständige Einhüllung der Innenhülse 1 mit dem Lagerkörper 3, 3', 4, insbesondere auch im Bereich der Stirnflächen, wird für sie außerdem ein Oberflächenschutz entbehrlich.

Als vorteilhaft ist es zudem anzusehen, dass die aufgepressten Ringscheiben 6, 6' zugleich als Abdichtung und Anschlag wirken und den Lagerkörper 3, 3', 4 derart unter Vorspannung halten, dass kein Axialspiel - und zwar auch nicht bei starker Beanspruchung unter Einsatzbedingungen - gegeben ist. Ebenfalls vorteilhaft ist die Möglichkeit einer Verwendung eines Elastomers (z. B. PUR oder Gummi) mit hohem Eigenschmieranteil für die Formteile 3, 3', da Haftungsprobleme zur Innenhülse 1 nicht bestehen. Durch die Verwendung eines Werkstoffs mit hohem Eigenschmieranteil verbessern sich die Gleiteigenschaften der Formteile 3, 3'. Beim Einsatz von Gummi ist auch ein geringerer Druckverformungsrest gegenüber PUR bzw. Kunststoff gegeben.

### Bezugszeichenliste

- 1: Innenhülse
- 2: Außenteil
- 3, 3': innerer Lagerköper bzw. Formteil des inneren Lagerkörpers
- 4: äußerer Lagerkörper
- 5: Innenteil
- 6, 6': Ringscheibe (Spacer)
- 7, 7': Randwulst

## Patentansprüche

1. Elastomeres Buchsenlager mit einer hohlzylindrischen Innenhülse (1), einem diese konzentrisch oder exzentrisch umgebenden hülsenförmigen Außenteil (2) und einem dazwischen eingeordneten elastomeren Lagerkörper (3, 3', 4), welcher aus einem inneren Lagerkörper (3, 3') und einem äußeren Lagerkörper (4) besteht, zwischen denen mindestens ein sich in Umfangs- und axialer Richtung erstreckendes Innenteil (5) eingeschlossen ist, wobei der innere Lagerkörper (3, 3') durch mindestens ein elastomeres Formteil gebildet ist, das von einem axialen Ende des Lagers zwischen Innenhülse (1) und mit dem äußeren Lagerkörper (4) verbundenen Innenteil (5), für diese je eine Gleitfläche ausbildend, eingeschoben und unter Vorspannung stehend mittels einer Ringscheibe (6, 6') gehalten ist, die auf das betreffende Lagerende aufgepresst ist und durch die dabei eingetretene Verformung unter Ausbildung eines Presssitzes an der Innenkontur der Innenhülse (1) anliegt, **dadurch gekennzeichnet, dass** das Formteil (3, 3') im Bereich des axialen Lagerendes einen Randwulst (7, 7') mit einem u förmig nach radial innen überhängenden Rand aufweist, der eine Umfassung für die Ringscheibe (6, 6') bildet.

2. Elastomeres Buchsenlager nach Anspruch 1, **dadurch gekennzeichnet, dass** das Innenteil (5) mit dem äußeren Lagerkörper (4) durch Vulkanisation verbunden ist.

3. Elastomeres Buchsenlager, nach Anspruch 1 oder 2, **dadurch gekennzeichnet, dass** der innere Lagerkörper (3, 3') aus zwei in gleicher Weise ausgebildeten und zwischen Innenhülse (1) und Innenteil (5) gehaltenen elastomeren Formteilen (3, 3') besteht, die von jeweils einem axialen Lagerende auf die Innenhülse (1) aufgeschoben und in axialer Richtung gegeneinander vorgespannt sind, wobei sie sich an den auf die Lagerenden aufgepressten Ringscheiben (6, 6') abstützen.

4. Elastomeres Buchsenlager nach einem der Ansprüche 1 bis 3, **dadurch gekennzeichnet, dass** das mindestens eine Formteil (3, 3') aus Gummi besteht.

5. Elastomeres Buchsenlager nach einem der Ansprüche 1 bis 4, **dadurch gekennzeichnet, dass** das mindestens eine Formteil (3, 3') an seiner Innen- und/oder seiner Außenseite Waben aufweist, in die ein Gleitmittel eingelagert ist, wobei durch die Ringscheibe oder die Ringscheiben (6, 6') eine auch das Austreten von Gleitmittel aus dem Lager verhindernde Dichtung ausgebildet ist.

6. Elastomeres Buchsenlager nach einem der Ansprüche 1 bis 5, **dadurch gekennzeichnet, dass** in dem äußeren Lagerkörper (4) zwei oder mehr durch mindestens einen Kanal miteinander verbundene Kammern zur Aufnahme eines fluiden Dämpfungsmittels ausgebildet sind.

7. Elastomeres Buchsenlager nach einem der Ansprüche 1 bis 6, **dadurch gekennzeichnet, dass** das mindestens eine Innenteil (5) aus Aluminiumblech oder Kunststoff besteht.

## Claims

1. Elastomer sleeve bearing with a hollow cylindrical inner sleeve (1), a surrounding concentric or eccentric sleeve-shaped outer part (2) and an interposed elastomeric bearing body (3, 3', 4) comprising an inner bearing body (3, 3') and an outer bearing body (4) between which is enclosed at least one inner part (5) extending circumferentially and axially, wherein the inner bearing body (3, 3') is formed by at least one elastomer molded part which is retained by an axial end of the bearing between the inner sleeve (1) and the inner part (5) connected with the outer bearing body (4) for which a respective sliding surface is formed and that is slid in and held under bias by means of an annular disc (6, 6') which is pressed onto the relevant end of the bearing to form a press fit on the inner contour of the inner sleeve (1) as a result of the resulting deformation, characterisd in that the molded part (3, 3') in the region of the axial bearing end has an edge bead (7, 7') with a U-shaped edge overhanging radially inwards to form an enclosure for the annular disc (6, 6').

2. Elastomer sleeve bearing according to Claim 1, **characterised in that** the inner part (5) is connected by vulcanization with the outer bearing body (4).

3. Elastomer sleeve bearing, according to Claim 1 or 2, **characterised in that** the inner bearing body (3, 3') consists of two elastomer molded parts (3, 3') that are formed in the same way and are retained between the inner sleeve (1) and the inner part (5), wherein they are respectively pushed from one axial bearing end to the inner sleeve (1) and biased against each other in the axial direction, and wherein they are supported on the annular discs (6, 6') that are pressed onto the bearing ends.

4. Elastomer sleeve bearing according to any one of Claims 1 to 3, **characterised in that** the at least one molded part (3, 3') consists of rubber.

5. Elastomer sleeve bearing according to any one of Claims 1 to 4, **characterised in that** the at least one molded part (3, 3') has a honeycomb on its inner and/or its outer side in which a lubricant is incorporated, wherein a seal is formed by the annular disc(s) (6, 6') to prevent the escape of lubricant from the bearing.

6. Elastomer sleeve bearing according to any one of Claims 1 to 5, **characterised in that** two or more chambers interconnected by at least one channel are formed to receive fluid damping means in the outer bearing body (4).

7. Elastomer sleeve bearing according to any one of Caims 1 to 6, **characterised in that** the at least one inner part (5) is made of aluminum sheet or plastic.

## Revendications

1. Palier à douille en élastomère avec un manchon interne (1) cylindrique creux, une partie externe (2) en forme de manchon entourant celui-ci de manière concentrique ou excentrique et un corps de palier en élastomère (3, 3', 4) disposé entre eux, qui est constitué d'un corps de palier interne (3, 3') et d'un corps de palier externe (4), entre lesquels est insérée au moins une partie interne (5) s'étendant dans la direction circonférentielle et dans la direction axiale, le corps de palier interne (3, 3') étant constitué d'au moins une pièce moulée en élastomère, qui est maintenue, par une extrémité axiale du palier entre le manchon interne (1) et la partie interne (5) reliée avec le corps de palier externe (4), en formant pour celle-ci une surface de glissement, de manière insérée et sous précontrainte au moyen d'une rondelle annulaire (6, 6'), qui est comprimée sur l'extrémité de palier concernée, et s'appuie, du fait de la déformation ainsi provoquée contre le contour interne du manchon interne (1) en formant un ajustement serré, **caractérisé en ce que** la pièce moulée (3, 3') comprend, au niveau de l'extrémité axiale du palier, un bourrelet (7, 7') avec un bord en surplomb radial à l'intérieur en forme de U, qui forme une enceinte pour la rondelle annulaire (6, 6').

2. Palier à douille en élastomère selon la revendication 1, **caractérisé en ce que** la pièce interne (5) est reliée avec le corps de palier externe (4) par vulcanisation.

3. Palier à douille en élastomère selon la revendication 1 ou 2, **caractérisé en ce que** le corps de palier interne (3, 3') est constitué de deux pièces moulées en élastomère (3, 3') conçues de manière identique et maintenues entre le manchon interne (1) et la pièce interne (5), qui sont insérées chacune à partir d'une extrémité axiale du palier sur le manchon interne (1) et sont précontraintes l'une contre l'autre dans la direction axiale, moyennant quoi elles s'appuient contre les rondelles annulaires (6, 6') comprimées sur les extrémités du palier.

4. Palier à douille en élastomère selon l'une des revendications 1 à 3, **caractérisé en ce que** l'au moins une pièce moulée (3, 3') est constituée de caoutchouc.

5. Palier à douille en élastomère selon l'une des revendications 1 à 4, **caractérisé en ce que** l'au moins une pièce moulée (3, 3') comprend, sur son côté interne et/ou son côté externe, des alvéoles dans lesquelles est inséré un lubrifiant, la rondelle annulaire ou les rondelles annulaires (6, 6') formant un joint d'étanchéité empêchant également la sortie du lubrifiant hors du palier.

6. Palier à douille en élastomère selon l'une des revendications 1 à 5, **caractérisé en ce que**, dans le corps de palier externe (4), sont prévues deux chambres ou plus reliées entre elles par au moins un canal, pour le logement d'un fluide d'amortissement.

7. Palier à douille en élastomère selon l'une des revendications 1 à 6, **caractérisé en ce que** l'au moins une pièce interne (5) est constitué d'une tôle d'aluminium ou de matière plastique.
